(19) Europäisches Patentamt

European Patent Office

Office européen des brevets

(11) **EP 4 278 665 B1**

(12) # EUROPEAN PATENT SPECIFICATION

(45) Date of publication and mention
of the grant of the patent:
**03.12.2025 Bulletin 2025/49**

(21) Application number: **21918658.2**

(22) Date of filing: **17.01.2021**

(51) International Patent Classification (IPC):
**H04W 28/02** *(2009.01)* **H04W 72/02** *(2009.01)*
**H04W 72/25** *(2023.01)*

(52) Cooperative Patent Classification (CPC):
**H04W 28/02; H04W 72/02;** H04W 72/25;
Y02D 30/70

(86) International application number:
**PCT/CN2021/072352**

(87) International publication number:
**WO 2022/151455 (21.07.2022 Gazette 2022/29)**

(54) **RESOURCE RESERVATION IN SIDELINK COMMUNICATIONS**

RESSOURCENRESERVIERUNG IN SIDELINK-KOMMUNIKATIONEN

RÉSERVATION DE RESSOURCE DANS DES COMMUNICATIONS EN LIAISON LATÉRALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.11.2023 Bulletin 2023/47**

(73) Proprietor: **Nokia Technologies Oy
02610 Espoo (FI)**

(72) Inventors:
• **LI, Dong**
**Shanghai 200135 (CN)**
• **LIU, Yong**
**Shanghai 200135 (CN)**
• **WILDSCHEK, Torsten**
**Gloucestershire GL4 5TW (GB)**
• **TAN, Jun**
**Glenview, Illinois 60026 (US)**

(74) Representative: **Script Intellectual Property LLP
Suite J, Anchor House
School Close
Chandlers Ford
Eastleigh, Hampshire SO53 4DY (GB)**

(56) References cited:
EP-A1- 3 352 519    WO-A1-2019/039989
WO-A1-2020/033381    CN-A- 107 734 551
CN-A- 112 153 705    US-A1- 2019 230 643

• **LG ELECTRONICS: "Discussion on feasibility
and benefits for mode 2 enhancement", vol. RAN
WG1, no. e-Meeting; 20200817 - 20200828, 8
August 2020 (2020-08-08), XP052347122,
Retrieved from the Internet <URL:https://
ftp.3gpp.org/tsg_ran/WG1_RL1/TSGR1_102-e/
Docs/R1-2005749.zip R1-2005749 Discussion on
sidelink mode 2 enhancement.docx> [retrieved
on 20200808]**
• **AT&T: "Resource allocation mode-2 for NR
sidelink", vol. RAN WG1, no. Reno, USA;
20191118 - 20191122, 8 November 2019
(2019-11-08), XP051823639, Retrieved from the
Internet <URL:https://ftp.3gpp.org/tsg_ran/
WG1_RL1/TSGR1_99/Docs/R1-1912841.zip
R1-1912841 Resource allocation mode-2 for NR
sidelink.docx> [retrieved on 20191108]**
• **NOKIA ET AL: "On SCI Contents", vol. RAN WG1,
no. Nanjing, China; 20160523 - 20160527, 14 May
2016 (2016-05-14), XP051096285, Retrieved from
the Internet <URL:http://www.3gpp.org/ftp/
tsg_ran/WG1_RL1/TSGR1_85/Docs/> [retrieved
on 20160514]**

## Description

## FIELD

Embodiments of the present disclosure generally relate to the field of telecommunication and in particular, to methods and for resource selection and reservation in sidelink communications.

## BACKGROUND

As one of the key technologies for the fifth-generation communication system, which is also referred to new radio (NR) technology, vehicle to everything (V2X) technologies can be based on D2D communication technologies, for example, the sidelink communication technology. There are two modes of resource allocation for V2X sidelink communications in the 5G system. For a first mode (also referred to as NR sidelink mode 1 or mode 1 hereinafter), one terminal device may communicate with the other terminal device by using resources allocated by a network device. For a second mode (also referred to as NR sidelink mode 2 or mode 2 hereinafter), one terminal device may communicate with other terminal device(s) on resources that are selected by UE autonomously from a resource pool configured or preconfigured for sidelink transmissions.

Specifically, for mode 2 NR sidelink communications, some of the terminal devices (e.g., vehicle UEs) may continuously perform channel sensing over a sidelink resource pool. In the context of sidelink communications, the operation "sensing" mainly refers to monitoring and blind decoding for a physical sidelink control channel (PSCCH), and measuring reference signal received powers (RSRP) on the PSCCH or on the associated physical sidelink shared channel (PSSCH) in the resource pool. In this case, the resources are selected from the resources within the resource selection window based on the sensing results within the sensing window such that the resources occupied by other proximate UEs are avoided. For the purpose of power saving, additionally or alternatively, due to a limited or even no receiving capability over the sidelink e.g. the pedestrian UEs, some of the UEs may select resources based on a random resource selection scheme and/or a partial sensing based resource selection scheme. Since the random resource selection and sensing or partial sensing based resource selection may coexist in the same resource pool, resource selection collisions may occur especially between random resource selection UEs and (partial) sensing based resource selection UEs, which impose severe threats on the reliability performance of the random selection UEs e.g. the pedestrian UEs. Thus, enhancements of random and sensing based resource selections for mode 2 are needed.

LG ELECTRONICS: "Discussion on feasibility and benefits for mode 2 enhancement" 1-6,9-13 INV. A 3GPP DRAFT; R1-2005749, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE vol. RAN WG1, no. e-Meeting; 20200817 -20200828 8 August 2020 (2020-08-08), XP052347122, URL: https://ftp.3gpp.org/tsg_ran/WGI_RL1/TSGR1_102-e/Docs/R1-2005749.zip relates to an assessment of the feasibility and benefit of various enhancement(s) in mode 2 for enhanced reliability and reduced latency. One proposal relates to use of time and frequency hopping to handle consecutive collision of periodic traffic.

US 2019/230643 A1 relates to a method and device for selecting resource and transmitting PSSCH in a wireless communication system. Described arrangements seek to address how a UE repeating transmission with a short reservation period selects resources and transmits a Physical Sidelink Shared Channel (PSCCH).

## SUMMARY

In general, example embodiments of the present disclosure provide a solution for resource selection and reservation in sidelink communications.
The invention is defined by the appended claims.

## BRIEF DESCRIPTION OF THE DRAWINGS

Some example arrangements will now be described with reference to the accompanying drawings, where:

Fig. 1 illustrates an example communication environment in which embodiments may be implemented;

Fig. 2 illustrates a flowchart of an example method of resource reservation in accordance with some example arrangements;

Fig. 3 illustrates a schematic diagram of an example candidate hopping resource set according to some example arrangements;

Fig. 4 illustrates a schematic diagram of an example CRC code according to some example arrangements;

Fig. 5 illustrates a schematic diagram of a frequency hopping in the hopped resource reservation scheme according to some example arrangements;

Figs. 6A illustrates an example candidate hopping resource set according to some example arrangements;

Fig. 6B illustrates a schematic diagram of a frequency-time hopping in the hopped resource reservation scheme according to some example arrangements;

Fig. 6C illustrates a schematic diagram of a time hopping in the hopped resource reservation scheme according to some example arrangements;

Fig. 7 illustrates a flowchart of an example method of resource selection in accordance with some example arrangements;

Fig. 8 illustrates a signaling flow for resource selection and reservation in accordance with some example arrangements;

Fig. 9 illustrates a simplified block diagram of an apparatus that is suitable for implementing arrangements; and

Fig. 10 illustrates a block diagram of an example computer readable medium in accordance with some arrangements.

Throughout the drawings, the same or similar reference numerals represent the same or similar element.

## DETAILED DESCRIPTION

Principles of the present disclosure will now be described with reference to some example arrangements. It is to be understood that these arrangements are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one arrangement," "an arrangement," "an example arrangement," and the like indicate that the arrangement described may include a particular feature, structure, or characteristic, but it is not necessary that every arrangement includes the particular feature, structure, or characteristic. Moreover, such phrases are not necessarily referring to the same arrangement. Further, when a particular feature, structure, or characteristic is described in connection with an arrangement, it is submitted that it is within the knowledge of one skilled in the art to affect such feature, structure, or characteristic in connection with other arrangements whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example arrangements. As used herein, the term "and/or" includes any and all combinations of one or more of the listed terms.

The terminology used herein is for the purpose of describing particular arrangements only and is not intended to be limiting of example arrangements. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future. Arrangementsmay be applied in various communication systems, including but not limited to a terrestrial communication system, a non-terrestrial communication system or a combination thereof. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

For both the legacy (e.g., LTE) and NR sidelink communications, there are two resource allocation modes, i.e., base station scheduling mode and UE autonomous resource selection mode. The base station scheduling mode can only be used for UEs in RRC_CONNECTED state in a cellular network coverage, while the UE autonomous resource selection mode can be used for UEs in various RRC states (i.e., idle/RRC inactive/RRC connected states) in a network coverage or for the UEs out of the network coverage.

Specifically, in the case of UE autonomous resource selection (i.e., Mode 4 in LTE sidelink or Mode 2 in NR sidelink), the UEs continuously perform channel sensing in a sensing window that mainly includes blind decoding for sidelink control channels and RSRP measurement as per decoded control channels, and then make the resource selection in the associated resource selection window based on the sensing results. With the development of the sidelink to 5G NR, the re-evaluation/pre-emption before potential sidelink transmissions over the initially selected but still not reserved resources is supported so as to mitigate resource selection collisions. This continuous channel sensing procedure introduces relatively large power consumption. This might not be a problem for the vehicle UEs; however, it is a serious concern for the UEs powered by batteries, such as, pedestrian UEs (e.g., P-UEs), public safety UEs or other hand held UEs involved in the sidelink transmissions.

Resource reservation for next one or more transport blocks (TBs) of the data traffic in the following reservation intervals (i.e. transmission periods) is supported for periodic sidelink traffic. The reservation is indicated by some control information field in the PSCCH, for example, 'Resource reservation period' in SCI format 1-A defined in NR sidelink Rel-16, which may be sensed by other UEs through the sensing procedures, so that the reserved resources can be avoided by the these UEs.

In order to reduce power consumption of the P-UEs in the resource selection for sidelink transmissions between the P-UEs and other device e.g., vehicle UEs, the P-UEs can be (pre)configured to make the resource selection based on random selection and/or partial sensing operations over the (pre)configured P2X resource pool. For sake of power saving or due to the fact that some of UEs may even have no reception capability on PSSCH and/or PSCCH, such UEs may have to randomly select resources from the resources in the resource selection window in the resource pool for their sidelink transmissions based on the random selection operations.

This may cause resource selection collisions for the case of coexistence of random resource selection UEs and sensing based resource selection UEs in a same resource pool. First, although resources may be reserved by the sensing UE in advance, the random selection UEs may occasionally select the same resources. Second, persistent collisions may occur between different random selection UEs. For example, if two proximate random selection UEs (e.g., P-UEs) have the same traffic periodicity and occasionally select fully or partially overlapped resources, the sidelink transmissions of these two UEs will collide persistently in the subsequent transmission periods. This may stop other UEs (e.g., vehicle UEs) from decoding both of the random selection UEs, which imposes severe threat on the safety of the pedestrian users. Additionally, such persistent collision issue also exists between random selection UEs and sensing UEs, which degrades performances of all these UEs and especially preventing sensing UEs (e.g., vehicle UEs) from decoding random selection UEs (e.g., P- UEs).

Assuming that a resource pool for mode 2 sidelink transmission is shared by random resource selection UEs with periodic traffic and sensing UEs, if the resources are reselected randomly for each TB (in each period), the sensing UEs cannot predict and avoid collisions with the random selection UEs. In this case, there is potential severe impact on the sensing UEs. If regular semi-persistent resource reservation procedure is used for the random selection UEs where ransom selection is performed in the first transmission period and from then on the same resource in the next period is reserved in current period until the next initial resource (re)selection, there will be potential persistent collisions between different random selection UEs and between random selection UEs and sensing UEs. In this case, there is potential severe impact on receiving data and/or from random selection UEs by the sensing UEs, e.g., if two near P-UEs randomly select the same resource and with the same period, the vehicles in proximity to the P-UEs may not be able to decode either message of the two P-UEs.

Actually, in the coexistence scenario mentioned above, the ideal operation manner could be as follows. In a first case, if the majority of UEs sharing the resource pool are using random resource selection method, the random resource selection shall be performed for each TB (i.e., in each period) in order to avoid persistent collisions between different random selection UEs. In a second case, if the majority of UEs sharing the resource pool are using sensing based resource selection, the random resource selection with regular persistent reservation until the next initial (re)selection is preferred for the random selection UEs in order to reduce the impact on the sensing UEs.

Generally, the random resource selection UEs may coexist with partial sensing UEs. If both random selection and partial sensing-based resource selection are enabled (e.g., in the configuration signaling 'SL-P2X-ResourceSelectionConfig-r14' in LTE sidelink Rel-14), random resource selection with semi-persistent resource reservation will be used for the pedestrian UEs performing random resource selection. In this case, the technical issue2 mentioned in previous section exists and thus has potential severe threat to the safety of the pedestrian users.

In order to solve the above and other potential problems, described arrangements provide a resource reservation mechanism for sidelink communications. In general, the terminal device using a random resource selection scheme can reserve resources for its subsequent transmissions in next one or more periods with pseudo-random resource hopping in frequency and/or time domains. The hopping of the reserved resource may follow a predetermined or preconfigured rule that is known by the terminal devices shared the same resource pool. As such, other terminal devices, when selecting resources for its transmission, may intentionally avoid the resources reserved for the transmissions of the terminal device. In this way, resource selection collisions between terminal devices using different resource selection schemes in the same resource pool can be alleviated. This is also beneficial to the system performance as well as the communication reliability.

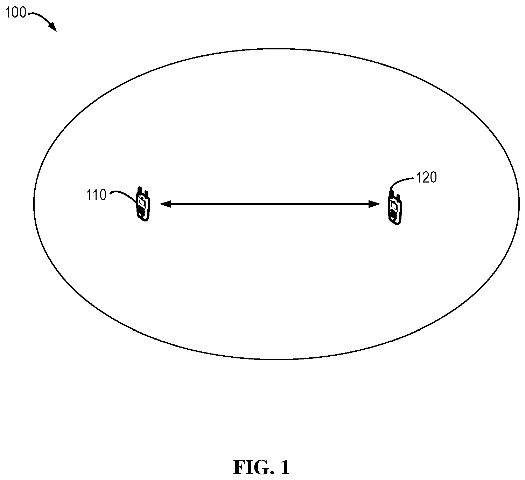

Reference is first made to Fig. 1, which illustrates an example communication environment 100 in which embodiments of the present disclosure may be implemented. As shown in Fig. 1, the communication environment 100, which may be a part of a communication network, includes a first device 110 and a second device 120.

In the context of the present disclosure, the first device 110 and the second device use sidelink resource allocation mode 2, i.e. UE-autonomous resource selection. That is, in the example arrangements, the sidelink communication is performed on the resources in a resource pool, which is configured or preconfigured for sidelink transmissions e.g. the ones by the first and second devices 110 and 120. Before performing any transmission on sidelink channels, the first device 110 may select resources based on a random resource selection scheme without sensing, and the second device 120 may select resources based on a full sensing based resource selection scheme or a partial sensing based resource selection scheme.

In the communication network 100 as shown in FIG. 1, the first device 110 and the second device 120 can perform sidelink transmissions to each other on a physical sidelink control channel (PSCCH) for sidelink control information and on a physical sidelink shared channel for data traffic. Additionally, the first and second devices 110 and 120 may have different receiving capabilities for PSSCH and PSCCH. For example, the first device 110 may have limited or no reception capability for sidelink channels for sake of power saving and reducing complexity.

It is to be understood that the number of network devices, terminal devices and/or cells is given for the purpose of illustration without suggesting any limitations to the present disclosure. The communication network 100 may include any suitable number of terminal devices and additional devices adapted for implementing implementations of the present disclosure. It is noted that although illustrated as mobile devices, the first device 110 and/or the second device 120 may be another device than a mobile device or a part of a mobile device, for example, at least a part of a vehicle.

Communications in the communication network 100 may be implemented according to any proper communication protocol(s), comprising, but not limited to, cellular communication protocols of the first generation (1G), the second generation (2G), the third generation (3G), the fourth generation (4G) and the fifth generation (5G) and on the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

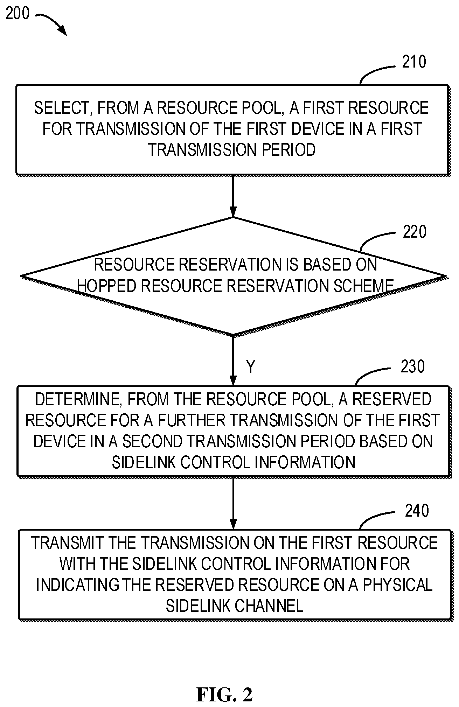

To better understand the resource reservation scheme proposed in the disclosure, reference is now made to Fig. 2, which illustrates an example method 200 of resource reservation in accordance with some arrangements. The method 200 can be implemented at a terminal device e.g., at the first device 110 as shown in Fig. 1. For the purpose of discussion, the method 200 will be described with reference to Fig. 1.

At 210, the first device 110 selects a first resource for its transmission from the resource pool in a first transmission period. The transmission of the first device 110 may be transmitted periodically on the PSCCH/PSSCH, and the transmission period of the first device 110 may correspond to a resource reservation period P.

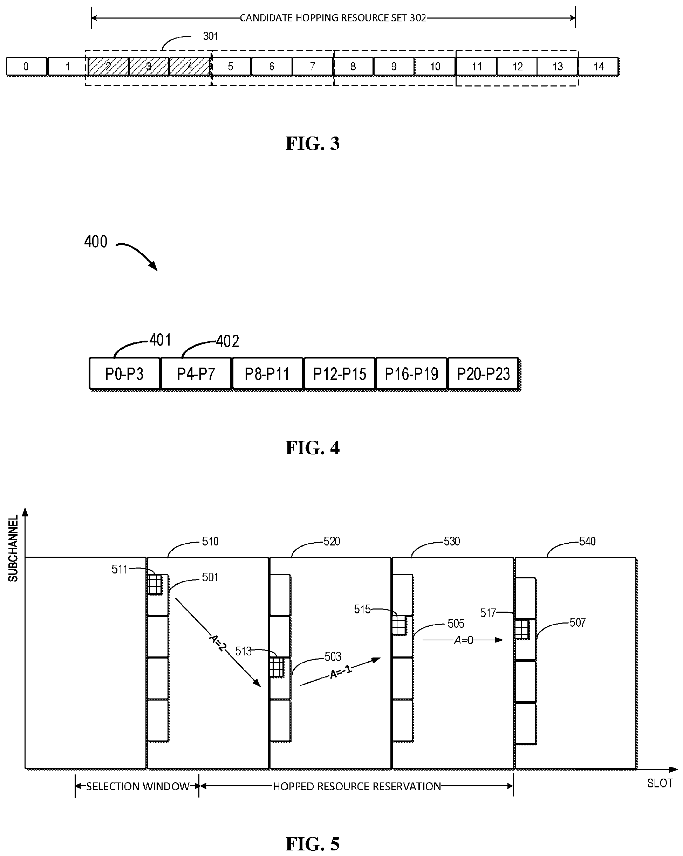

The first device 110 may initiate the resource selection based on the random resource selection scheme at slot $t'^{SL}_n$, and the first resource is randomly selected from the resource pool over a resource selection window. In the example embodiments, the resource pool includes $M_{subCH}$ subchannels, and the first resource is denoted by $R_{x,y}$ which includes $L_{subCH}$ contiguous subchannels with subchannel $x+j$ in slot $t'^{SL}_y$, where $j = 0,..., L_{subCH} - 1$, $x$ represents a start subchannel index of the first resource and $y$ represents the slot index of the first resource, assuming that the index of subchannel starts from 0. Fig. 3 illustrates a schematic diagram of an example resource selection according to some arrangements. In the example as shown in Fig. 3, $M_{subCH} = 15$, $L_{subCH} =3$, and $x = 2$, that is, the first resource 301 includes subchannels 2 to 4.

At 220, the first device 110 determines whether a resource reservation for the transmission is based on a hopped resource reservation scheme. In the context of the embodiments, the hopped resource reservation scheme refers to reserving resources for next one or more transmission periods by hopping in frequency and/or time domain with respect to the randomly selected resource, i.e., the first resource. In other words, the resources for the subsequent transmission(s) of the first device 110 are reserved in a pseudo-random manner. The hopping rule is known by both the first device 110 and the second device 120, such that the second device 120, by using the same rule, may determine the reserved resources based on its sensing results.

In some example arrangements, the first device 110 may determine whether to enable the hopped resource reservation scheme. In some other arrangements, the hopped resource reservation scheme may be (pre)configured by the network per resource pool. In these arrangements, all the terminal devices associated with the same resource pool may be configured to perform the resource reservation based on the hopping rule for the periodic sidelink transmissions.

If the resource reservation for the transmission is determined, at 220, to be based on the hopped resource reservation scheme, at 230, the first device 110 determines a reserved resource for its further transmission in a second transmission period from the resource pool based on the SCI in the first transmission period. The second transmission period may be after the first transmission period. For example, the second transmission period may immediately follow the first transmission period. As used in the example arrangements, the SCI may refer to the SCI transmitted on the PSCCH, for example, the first stage SCI as defined in NR sidelink Rel-16.

The first device 110 may determine a candidate hopping resource set 302 where the reserved resources are hopped in frequency (and/or time domains, note that the candidate hopping resource set 302 shown in Fig. 3 is only for frequency domain) with respect to the first resource 301 based on the hopped resource reservation scheme.

By way of example, the candidate hopping resource set 302 may extend from the first resource 301 in both directions in frequency domain, such that the resources in the candidate hopping resource set 302 are contiguous without any overlapping. In addition, there may be some remaining subchannels less than $L_{subCH}$ at the beginning and end of the frequency domain of the resource pool. It should be understood that the candidate hopping resource set 302 may be determined by any other suitable rule, and the scope of the present disclosure is not limited in this aspect.

In some example arrangements, the reserved resource may be determined to be hopped in frequency domain but not hopped in time domain. As shown in Fig. 3, the candidate hopping resource set 302 may be defined to include M groups of subchannels, denoted by 0, 1,...,M-1, with M=4 as shown in Fig. 3. In the current period, i.e., the first transmission period, the index of the selected/used resource (e.g., the first resource 301) is denoted by m $(0 \leq m < M)$. In the following descriptions, the candidate hopping resource set 302 may be also referred to as a first candidate hopping resource set which include a first number of contiguous channels, and in this case, the first number is equal to M · $L_{subCH}$.

The first device 110 may determine a position of the reserved resource in the candidate hopping resource set 302 based on the cyclic redundancy check (CRC) bits of the sidelink control information (SCI) of the first device 110. In this way, the resource reservation of the first device 110 may be indicated by one or more CRC bits of the SCI, which may be sensed by other terminal devices using the same resource pool, so that the reserved resources can be derived and avoided by the other terminal devices.

The SCI and the associated CRC bits pass through processing of channel coding and modulation and are transmitted on the physical sidelink control channel (e.g., PSCCH) in the same slot as the data transmission on the PSSCH. The CRC bits are used by the receiver of data transmission for detecting errors in the decoded transport blocks, and typically include 24 bits as defined in NR sidelink. Fig. 4 illustrates a schematic diagram of an example CRC bits 400 according to some example arrangements. As shown in Fig. 4, CRC bits 400 includes 24 bits, i.e., bits $P_0$ to $P_{23}$. Based on different subsets of the CRC bits, one or more hopping factors may be determined for hopping of the reserved resource in the candidate hopping resource set 302.

Assuming that the decimal representation of CRC bits on the PSCCH may be derived as follows,

$$n_{ID}^X = \sum_{i=0}^{L-1} p_i \cdot 2^{L-1-i} \qquad (1)$$

The first device 110 determines, in accordance with the claims, a first hopping factor A based on a first subset of CRC bits of the SCI of the first device 110, for example, the first subset 401. The first hopping factor A may indicate the hopping of the reserved resource with respect to the first resource 301 in frequency domain. In other words, the first hopping factor A may be associated with an offset of the reserved resource in frequency domain with respect to the first resource 301. In some example arrangements, the first hopping factor A may be determined as follow:

$$A = mod(m + n_{ID}^X, M) - m \qquad (2)$$

where mod $(a, b)$ denotes the modular operation of $a$ over $b$. The rule for determining the frequency hopped resource reservation can be a Hash function $f(n_{ID}^X) = A$ that maps the CRC value $n_{ID}^X$ of PSCCH to the first hopping factor A.

The first device 110 may then determine the reserved resource based on the first hopping factor A, a resource reservation period P of the first device 110, and the index of the first resource. Fig. 5 illustrates a schematic diagram of a frequency hopping in the hopped resource reservation scheme according to some example arrangements. As shown in Fig. 5, the first device 110 may transmit the transmissions 501 to 507 with respective CRC bits in the associated PSCCH 511 to 517 in transmission periods 510 to 540 respectively. For the transmission period 520, where m=2 and M=4, assuming $n_{ID}^X = 403$, the first hopping factor A for the transmission period 530 being after the transmission period 520 may be determined to be A = mod(2 + 403,4) - 2 = -1. As such, the reserved resource 505 in the transmission period 530 may be hopped one subchannel in frequency domain with respect to the resource 503 in the transmission period 520.

It should be understood that the rule as shown in formula (2) is an example of the Hash function and the example shown in Fig. 5 is given as one of rules for determining the frequency hopped resource reservation, other rules are also suitable arrangements.

In some arrangements, the reserved resource may be determined to be hopped in both time and frequency domains. In these arrangements, in addition to the first hopping factor A, the first device 110 may determine a second hopping factor B for determining the time hopped resource reservation. Assuming that the resource (re)selection is initiated at slot $t'^{SL}_n$, with $M_{subCH}$ = 16, $L_{subCH}$ = 2, and x = 2 with the index starting from 0, and the first resource, denoted by $R_{x,y}$ includes a set of $L_{subCH}$ contiguous sub-channels with subchannel x+j in slot $t'^{SL}_y$ where j = 0,..., $L_{subCH}$ - 1.

The first device 110 may determine a first candidate hopping resource set in frequency domain based on an index of the first resource. The first candidate hopping resource set may include the first number of contiguous groups of resources in frequency domain for frequency hopping in the second transmission period. In the example arrangements, the first candidate hopping resource set may be defined to include only the nearest resources to the resource randomly selected or used by the first device 110, i.e. the number of resource groups is three including the used/selected resource itself. This may be beneficial to limit a hopping range in frequency domain.

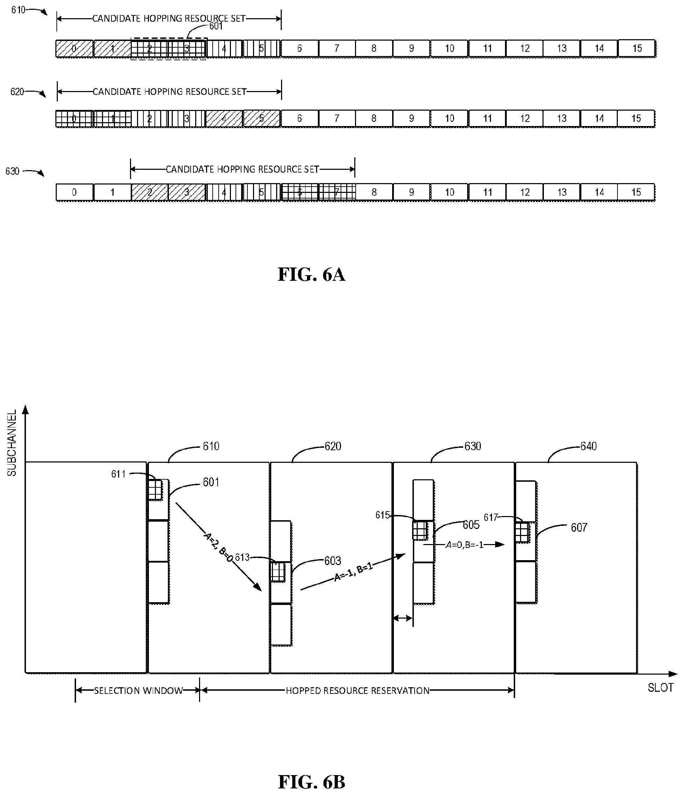

Fig. 6A illustrates an example candidate hopping resource set according to some example arrangements. As shown in Fig. 6A, the first candidate hopping resource set may include 3 group of resources that are nearest to the selected or used resource. For example, in the first transmission period 610, the first resource 601 includes subchannels 2 and 3, and thus the first candidate hopping resource set may be determined to include subchannels 0 to 5 which are nearest to the subchannels 2 and 3. For the next period, i.e., the second transmission period 620, the reserved resource may hop to subchannels 0 and 1, in this case, the first candidate hopping resource set still includes the subchannels 0 to 5. For the third transmission period 630, the reserved resource may hop to subchannels 4 and 5, with the first candidate hopping resource set including the subchannels 2 to 7.

Similar to determining the first candidate hopping resource set, the first device 110 may determine a second candidate hopping resource set in time domain based on an index of the first resource. The second candidate hopping resource set may include a second number of contiguous slots, which may be the nearest slots configured for the resource pool. For example, assume the first resource 601 in the first transmission period 610 is at sidelink slot $t'^{SL}_{y}$ , then the second candidate hopping resource set for the next transmission period, i.e., the second transmission period 620, may be

$$\{t'^{SL}_{y+P-1}, t'^{SL}_{y+P}, t'^{SL}_{y+P+1}\}.$$

The first device 110 then determines, in accordance with the claims, the first hopping factor A based on the first subset of CRC bits of the SCI, and the second hopping factor B based on the second subset of CRC bits of the SCI. The first and second hopping factors A and B may be associated with respective offsets of the reserved resource in frequency and time domain with respect to the first resource 601, respectively.

Continuing to the example shown in Fig. 6A, in first transmission period 610, the index of the first resource within the first candidate hopping resource set is denoted by m ($0 \leq m < M$), and the second candidate hopping resource set may include K values, denoted by 0,1,•••,K-1, K=3 in Fig. 6A.

With the CRC including 24 bits denoted by $P_0$ to $P_{23}$ as shown in Fig. 4, the first and second hopping factors A and B may be determined as follows:

$$A = mod(m + n_{FH}, M) - m \qquad (3)$$

$$B = mod(n_{TH}, K) - 1 \qquad (4)$$

where, $n_{FH} = \sum_{i=0}^{3} p_i \cdot 2^{3-i}$ and

$n_{TH} = \sum_{i=0}^{3} p_{4+i} \cdot 2^{3-i}$.

The first device 110 may determine the reserved resource based on the first and second hopping factors A and B, a resource reservation period P and the first and second candidate hopping resource sets. In this case, the first resource $R_{x,y}$ in the first transmission period 610 will hop to the reserved resource in the second transmission period 620 as below:

$$R_{x',y'} = R_{x+A \cdot L_{subCH}, y+P+B} \qquad (5)$$

The resource $R_{x',y'}$ is reserved for the further transmission of the first device 110 in the next transmission period. As shown in Fig. 6B, which illustrates a schematic diagram of a frequency-time hopping in the hopped resource reservation scheme according to some example arrangements, in the second transmission period 620, the index of the used resource 603 within the first candidate hopping resource set is m=1, with M=3, that is, the first candidate hopping resource set includes 3 groups of subchannels. Assuming that the first subset of the CRC bits, e.g., $P_0$ to $P_3$, is '0101', in this case, the first hopping factor A may be determined to be $A = mod(1 + 5,3) - 1 = -1$. Assuming that the second subset of the CRC bits, e.g., $P_4$ to $P_7$ are '1011', with K=3, the second hopping factor B may be determined to be $B = mod(11,3) - 1 = 1$. As a result, the first and second hopping factors are (A=-1, B=1), and the frequency-time hopping based on such hopped resource reservation scheme is shown as Fig. 6B.

It should be understood that the rule for determining the first and second hopping factors associated with frequency and time hopping may be any Hash function $g(n_{ID}^{X}) = (A, B)$ that maps the CRC value $n_{ID}^{X}$ to the first hopping factor A and the second hopping factor B. The above rule determined in formulas (3) and (4) is given as an example of the Hash function g (·), and any other Hash functions are also applicable for determining the frequency and time hopping factor.

In some example arrangements, the reserved resource may be determined to be hopped in time domain but not hopped in frequency domain. In these arrangements, the first hopping factor A may be set to 0, and the first device 110 may use similar rules for determining the second candidate hopping resource set as the rules for determining the second candidate hopping resource set as discussed above with connection to Fig. 6A and 6B.

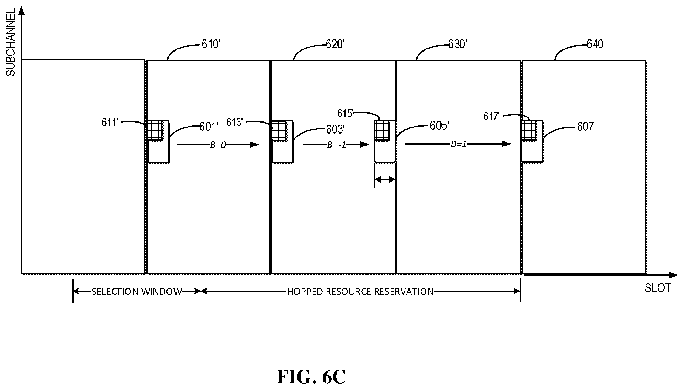

Fig. 6C illustrates a schematic diagram of a time hopping in the hopped resource reservation scheme according to some example arrangements. As shown in Fig. 6C, in the second transmission period 620, the second subset of the CRC bits $P_4$ to $P_7$ are '1100', with K=3, the second hopping factor B may be determined to be $B = mod(12,3) - 1 = -1$. As a result, the second hopping factor B is equal to -1. The first device 110 may then determine the reserved resources based on the second hopping factor B, the resource reservation period P and the second candidate hopping resource set.

At 240, the first device 110 transmits the transmission on the first resource 301 with the SCI indicating the reserved resource. Herein the SCI is conveyed on a physical sidelink control channel, for example, PSCCH. The SCI may include an indicator of the hopped resource reservation scheme being enabled, for example, a first bit in the first stage SCI. It should be understood that the first bit of the SCI may be any of the bits in the SCI. Additionally, the first bit of the SCI does not necessarily include only one bit, but can include more bits as needed. In this way, the terminal device that receives the SCI on the PSCCH (e.g., the second device 120) may determine that the hopped resource reservation scheme is used by the first device 110.

In some example embodiments, the first device 110 may transmit the further transmission on the reserved resource in the second transmission device.

It is to be understood that the example implementation is given for purpose of illustration without any limitation. Additionally, the first device 110 and the second device 120 have the knowledge about the hopped resource reservation scheme, and the hash functions for determining the first and second hopping factors. As such, the resource selection collisions between terminal devices using different resource selection schemes in the same resource pool can be alleviated, which is beneficial to the system performance, the communication reliability.

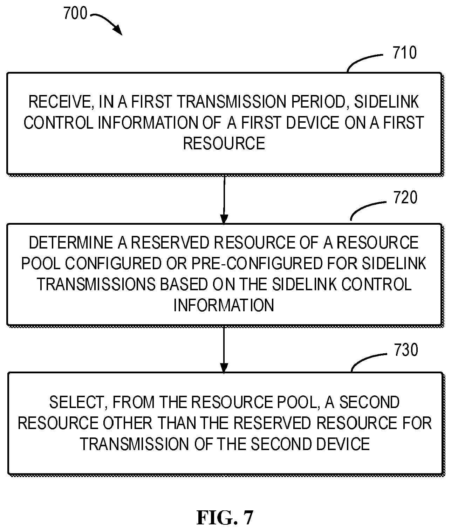

Fig. 7 illustrates a flowchart of an example method 700 for resource selection according to some example arrangements. The method 700 can be implemented at a terminal device e.g., at the second device 120 as shown in Fig. 1. For the purpose of discussion, the method 700 will be described with reference to Fig. 1.

Before transmitting any data or traffic on the physically sidelink channel, the second device 120 needs to select one or more resources in the resource selection window based on the sensing results over the sensing window in a resource pool (pre)configured for sidelink transmissions. In the example arrangements, the second device 120 may use various resource selection schemes, for example, sensing based resource selection scheme, partial sensing-based resource selection scheme and the like.

The second device 120 may determine the channel occupancy and the resource reservation based on SCI received on the PSCCH, so as to select appropriate resources. At block 710, the second device 120 receives SCI of the first device 110 on a first resource in a first transmission period. The first device 110 may be a terminal device that transmits periodic traffic and uses the random resource selection scheme. The SCI from the first device 110 may indicate resource reservation for a further transmission of the first device 110 in the next transmission period. As used in the example arrangements, the SCI may refer to the SCI transmitted on the PSCCH, for example, the first stage SCI as defined in NR sidelink.

At 720, the second device 120 determines a reserved resource that is reserved by the first device 110 in the resource pool configured or pre-configured for sidelink transmissions based on the SCI conveyed in PSCCH. The reserved resource may be reserved for transmission of the first device 110 in a second transmission period being after the first transmission period.

In some example arrangements, a first bit of the SCI, for example, in the SCI conveyed in PSCCH (this SCI also called the first stage SCI in NR sidelink), may indicate that resource reservation for the transmission of the first device 110 is based on the hopped resource reservation scheme. In this case, the resource pool may support both the hopped and non-hopped resource reservation schemes, and the second device 120 may determine whether the hopped resource reservation scheme of the first device 110 is enabled based on the first bit in the mentioned SCI. It should be understood that the first bit of the SCI may be any of the bits in the SCI. Additionally, the first bit of the SCI does not necessarily include only one bit, but can include more bits as needed.

In some other example arrangements, the hopped resource reservation scheme may be (pre)configured per the resource pool. In this case, all the terminal devices using that resource pool may use the hopped resource reservation scheme for the periodic data traffic. The resource pool (pre)configuration from the network may explicitly or implicitly indicate whether hopped resource reservation scheme is enabled in a specific resource pool. As such, the second device 120 may determine that the resource pool is configured or pre-configured for supporting hopped resource reservation, and then determine the resources for the transmission of the first device 110 are reserved based on the hopped resource reservation scheme.

The first stage SCI of the first device 110 is attached with the CRC bits for error detection which includes a set of bits, for example, bits $P_0$ to $P_{23}$ as shown in Fig. 3. Additionally, or alternatively, one or more subsets of the CRC bits may indicate different hopping parameters related to the hopped resource reservation scheme. In some example arrangements, the second device 120 may determine a first hopping factor $A$ based on a first subset of CRC bits of the SCI of the first device 110. The first hopping factor $A$ may indicate the hopping of the reserved resource with respect to the first resource in frequency domain. For example, the first hopping factor A may be associated with an offset of the reserved resource in frequency domain with respect to the first resource. The second device 120 may then determine the reserved resource based on the first hopping factor $A$, a resource reservation period $P$ of the first device 110, and the index of the first resource.

In some other example arrangements, the second device 120 may determine a second hopping factor B based on a second subset of CRC bits of the SCI of the first device 110. The first subset and the second subset may be non-overlapped, partially overlapped or fully overlapped with each other. The second hopping factor $B$ may indicate the hopping of the reserved resource with respect to the first resource in time domain. For example, the second hopping factor $B$ may be associated with an offset of the reserved resource in time domain with respect to the first resource. The second device 120 may determine the reserved resource based on the second hopping factor *B*, the resource reservation period P of the first device 110, and the index of the first resource.

The first and second hopping factors *A* and *B* may be used independently or in combination. In other words, the hopped resource reservation scheme may reserve resources in a frequency hopped manner by only indicating the first hopping factor A, a time hopped manner by only indicating the second hopping factor *B*, or a frequency-time hopped manner by indicating both first and second hopping factors *A* and *B* through the CRC bits. In still other example arrangements, the second device 120 may determine the first and second hopping factors *A* and *B* based on the first and second subsets of CRC bits of the SCI, respectively. The second device 120 may then determine the reserved resource based on the first and second hopping factors *A* and *B,* the index of the first resource and the resource reservation period *P* of the first device 110.

At 730, the second device 120 selects a second resource other than the reserved resource from the resource pool for transmission of the second device 120. The second device 120 may then transmit traffic on the second resource. In this way, the second device 120 can accurately determine resources reserved by other terminal devices, and thus the resource selection collision can be avoided.

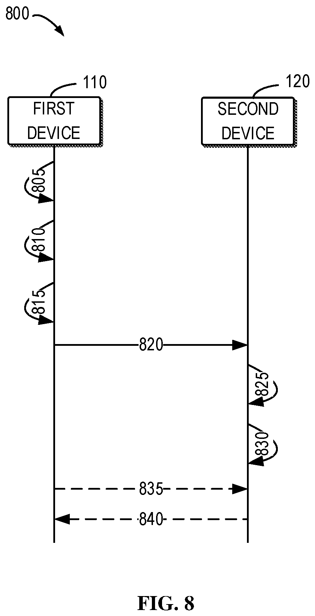

Reference is now made to Fig. 8, which illustrates a signaling flow 800 for resource selection and reservation in accordance with some example arrangements. For the purpose of discussion, the signaling flow 800 will be described with reference to Fig. 1. The signaling flow 800 may involve the first device 110 and the second device 120 as illustrated in Fig. 1.

In the example arrangements, the first device 110 may transmit periodic data traffic over the sidelink, and before transmitting, the first device 110 may select resources by using the random resource selection scheme. The first device 110 selects 805, from a resource pool, a first resource for transmission of the first device 110 in a first transmission period. The resource pool refers to a set of time and frequency resources that can be used for sidelink transmissions and the resource pool can be configured or preconfigured through higher layer signaling. In this example, both the first device 110 and the second device 120 share the same resource pool.

The first device 110 may determine 810 whether the resource reservation for the transmission is based on the hopped resource reservation scheme. In some arrangements, the resource pool is configured or preconfigured for supporting hopped resource reservation, which may be explicitly or implicitly indicated by resource pool configurations from the network. In some other arrangements, the first device 110 may determine that the hopped resource reservation scheme is enabled. In this case, the first device 110 may indicate this fact by setting one or more bit in the SCI, for example, a first bit in the first stage SCI. It should be understood that the first bit of the SCI may be any of the bits in the SCI. Additionally, the first bit of the SCI does not necessarily include only one bit, but can include more bits as needed.

If the first device 110 determines that the resource reservation for the transmission is based on the hopped resource reservation scheme, the first device 110 determines 815 a reserved resource from the resource pool for its further transmission in a second transmission period based on SCI over the PSCCH. The second transmission period may be being after the first transmission period.

By means of the hopped resource reservation scheme, the reserved resource is determined to be "hopped" in frequency and/or time domains with respect to the first resource. Specifically, one or more hopping factors indicative of the hopping of the reserved resource in frequency and/or time domains with respect to the first resource may be determined based on one or more bits in the CRC of the SCI which is conveyed on PSCCH.

For example, a first hopping factor *A* may be determined based on a first subset of the CRC bits of the SCI, and the first hopping factor *A* is associated with an offset of the reserved resource in frequency domain with respect to the first resource. For another example, the first hopping factor *B* may be determined based on a second subset of the CRC bits of the SCI, and the second hopping factor *B* is associated with an offset of the reserved resource in frequency domain with respect to the first resource. The reserved resource is determined by using the first and second hopping factors *A* and *B* alone or in combination.

The first device 110 then transmits 820 the transmission on the determined first resource with the SCI indicating the resource reservation. For example, the data transmission may be transmitted on the PSSCH and the SCI may be transmitted on the PSCCH. As used in the example arrangements, the SCI for indicating the resource reservation may refer to the SCI transmitted on the PSCCH, for example, the first stage SCI as defined in NR sidelink.

In some example arrangements, a first bit of the SCI, for example, in the first stage SCI, may indicate that resource reservation for the transmission of the first device 110 is based on the hopped resource reservation scheme. In this case, the resource pool may support both the hopped and non-hopped resource reservation schemes, and the second device 120 may determine whether the hopped resource reservation scheme of the first device 110 is enabled based on the first bit in the SCI. In some other example arrangements, the hopped resource reservation scheme may be (pre)configured per the resource pool. In this case, all the terminal devices using that resource pool may use the hopped resource reservation scheme for the periodic data transmissions. The resource pool (pre)configuration from the network may explicitly or implicitly indicate whether hopped resource reservation scheme is enabled in a specific resource pool.

The second device 120 shares the same resource pool with the first device 110, and before transmitting, it may select resources by using the full sending or partial sensing based resource selection scheme. For the purpose of discussion, the second device 120 is described as using the full sensing based resource selection scheme. It should be understood that the arrangements are also applicable to the case where the second device 120 uses the partial sensing based resource selection scheme.

In the first transmission period, the second device 120 receives the SCI of the first device 110 on the first resource, for example, by performing sensing over the physical sidelink control channel. The second device 120 may determine a fact that the reserved resource for the transmission of the first device 110 is reserved based on the hopped resource reservation scheme from the SCI, for example, as indicated in the first stage SCI. Alternatively, the hopped resource reservation scheme may be configured or preconfigured by the network per resource pool.

The second device 120 determines 825 the reserved resource in the resource pool based on the SCI. In these arrangements, the reserved resource in the resource pool includes the resource reserved for transmission of the first device 110 in a second transmission period, which may immediately follow the first transmission period.

As discussed above, the reserved resource may be derived from the SCI of the first device 110. Specifically, the second device 120 may determine one or more of the first and second hopping factors $A$ and $B$ from the CRC bits of the SCI. By using the first and second hopping factors $A$ and $B$ alone or in combination, the second device 120 may accurately determine the reserved resource in time and frequency domain based on the index of the first resource and the resource reservation period $P$ of the first device 110. In this way, the second device 120 can avoid the reserved resources when making resource selection.

The second device 120 selects 830 the second resource other than the reserved resource from the resource pool for transmission of the second device 120. Subsequently, the first device 110 may transmit 835 its further transmission on the reserved resource in the second transmission period. Additionally, the second device 120 may transmit 840 its transmission on the second resource.

It should be understood that, although in Fig. 8, the transmission of the first device 110 is shown to be towards the second device 120, and the transmission of the second device 120 is shown to be towards the first device 110, the destinations of these transmissions may be any other terminal devices sharing the same resource pool. Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous.

In some example arrangements, an apparatus capable of performing the method 200 may comprise means for performing the respective steps of the method 200. The means may be implemented in any suitable form. For example, the means may be implemented in a circuitry or software module.

In some example arrangements, the first apparatus comprises: means for selecting, from a resource pool, a first resource for transmission of the first apparatus in a first transmission period, the resource pool configured or preconfigured for sidelink transmission; means for in accordance with a determination that a resource reservation for the transmission is based on a hopped resource reservation scheme, determining, from the resource pool, a reserved resource for a further transmission of the first apparatus in a second transmission period based on sidelink control information, the second transmission period being after the first transmission period; and means for transmitting the transmission on the first resource with the sidelink control information on a physical sidelink channel, the sidelink control information indicating the reserved resource.

In some example arrangements, the first resource is selected based on a random resource selection scheme.

In some example arrangements, the sidelink control information comprises a first bit indicating that the resource reservation for the transmission is based on the hopped resource reservation scheme.

In some example arrangements, the first apparatus further comprises means for in accordance with a determination that the resource pool is configured or preconfigured for supporting hopped resource reservation, determining the resource reservation for the transmission is based on the hopped resource reservation scheme.

In some example arrangements, the means for determining the reserved resource comprises: means for determining a first candidate hopping resource set in frequency domain based on an index of the first resource, the first candidate hopping resource set comprising a first number of continuous subchannels in the resource pool; means for determining a first hopping factor based on a first subset of cyclic redundancy check bits of the sidelink control information, the first hopping factor associated with an offset of the reserved resource in frequency domain with respect to the first resource; and means for determining the reserved resource based on the first hopping factor, the first candidate hopping resource set and a resource reservation period.

In some example arrangements, the means for determining the reserved resource comprises: determining a second candidate hopping resource set in time domain based on an index of the first resource, the second candidate hopping resource set comprising a second number of contiguous slots corresponding to the resource pool in the second transmission period; means for determining a second hopping factor based on a second subset of cyclic redundancy check bits of the sidelink control information, the second hopping factor associated with an offset of the reserved resource in time domain with respect to the first resource; and means for determining the reserved resource based on the second hopping factor, a resource reservation period and the second candidate hopping resource set.

In some example arrangements, the means for determining the reserved resource comprises: means for determining a first candidate hopping resource set in frequency domain based on an index of the first resource, the first candidate hopping resource set comprising a first number of continuous subchannels in the resource pool; means for determining a second candidate hopping resource set in time domain based on an index of the first resource, the second candidate hopping resource set comprising a second number of contiguous slots corresponding to the resource pool in the second transmission period; means for determining a first hopping factor based on a first subset of cyclic redundancy check bits of the sidelink control information, the first hopping factor associated with an offset of the reserved resource in frequency domain with respect to the first resource; means for determining a second hopping factor based on a second subset of the cyclic redundancy check bits of the sidelink control information, the second hopping factor associated with an offset of the reserved resource in time domain with respect to the first resource; and means for determining the reserved resource based on the first hopping factor, the second hopping factor, a resource reservation period and the first and second candidate hopping resource sets.

In some example arrangements, the first apparatus further comprises: means for transmitting the further transmission on the reserved resource on the physical sidelink channel in the second transmission period.

In some example arrangements, the first apparatus comprises a terminal device.

In some example arrangements, a second apparatus capable of performing the method 700 may comprise means for performing the respective steps of the method 700. The means may be implemented in any suitable form. For example, the means may be implemented in a circuitry or software module.

In some example arrangements, the second apparatus comprises: means for receiving, in a first transmission period, sidelink control information of a first apparatus on a first resource; means for means for determining a reserved resource of a resource pool configured or pre-configured for sidelink transmissions based on the sidelink control information, the reserved resource reserved for transmission of the first apparatus in a second transmission period, the second transmission period being after the first transmission period; and means for means for selecting, from the resource pool, a second resource other than the reserved resource for transmission of the second apparatus.

In some example arrangements, the second resource is selected based on one of sensing based resource selection scheme or partial sensing based resource selection scheme.

In some example arrangements, the second apparatus further comprises: means for determining, based on a first bit of the sidelink control information, the reserved resource for the transmission of the first device reserved based on a hopped resource reservation scheme.

In some example arrangements, the second apparatus further comprises: means for in accordance with a determination that the resource pool is configured or pre-configured for supporting hopped resource reservation, determining the reserved resource for the transmission of the first device reserved based on the hopped resource reservation scheme.

In some example arrangements, the means for determining the reserved resource comprises: means for determining a first hopping factor based on a first subset of cyclic redundancy check bits of the sidelink control information, the first hopping factor associated with an offset of the reserved resource in frequency domain with respect to the first resource; and means for determining the reserved resource based on the first hopping factor, a resource reservation period and an index of the first resource.

In some example arrangements, the means for determining the reserved resource comprises: means for determining a second hopping factor based on a second subset of cyclic redundancy check bits of the sidelink control information, the second hopping factor associated with an offset of the reserved resource in time domain with respect to the first resource; and means for determining the reserved resource based on an index of the first resource, the second hopping factor and a resource reservation period.

In some example arrangements, the means for determining the reserved resource comprises: means for determining a first hopping factor based on a first subset of cyclic redundancy check bits of the sidelink control information, the first hopping factor associated with an offset of the reserved resource in frequency domain with respect to the first resource; determining a second hopping factor based on a second subset of cyclic redundancy check bits of the sidelink control information, the second hopping factor associated with an offset of the reserved resource in time domain with respect to the first resource; and means for determining the reserved resource based on the first hopping factor, the second hopping factor, the index of the first resource and a resource reservation period.

In some example arrangements, the first apparatus comprises a terminal device, and the second apparatus comprises a further terminal device.

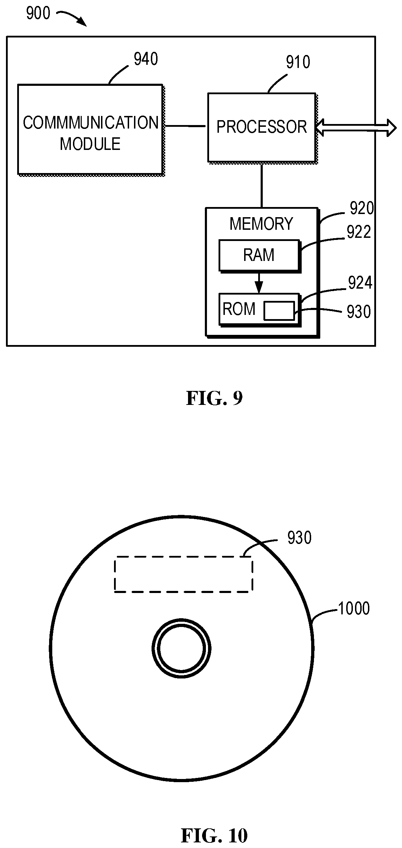

Fig. 9 is a simplified block diagram of a device 900 that is suitable for implementing arrangements. The device 900 may be provided to implement the communication device, for example the first device 110 or the second device 120 as shown in Fig. 1. As shown, the device 900 includes one or more processors 910, one or more memories 920 coupled to the processor 910, and one or more communication modules 940 coupled to the processor 910.

The communication module 940 is for bidirectional communications. The communication module 940 has at least one antenna to facilitate communication. The communication interface may represent any interface that is necessary for communication with other network elements.

The processor 910 may be of any type suitable to the local technical network and may include one or more of the following: general purpose computers, special purpose computers, microprocessors, digital signal processors (DSPs) and processors based on multicore processor architecture, as non-limiting examples. The device 900 may have multiple processors, such as an application specific integrated circuit chip that is slaved in time to a clock which synchronizes the main processor.

The memory 920 may include one or more non-volatile memories and one or more volatile memories. Examples of the non-volatile memories include, but are not limited to, a Read Only Memory (ROM) 924, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 922 and other volatile memories that will not last in the power-down duration.

A computer program 930 includes computer executable instructions that are executed by the associated processor 910. The program 930 may be stored in the ROM 924. The processor 910 may perform any suitable actions and processing by loading the program 930 into the RAM 922.

The arrangements may be implemented by means of the program 930 so that the device 900 may perform any process of the disclosure as discussed with reference to Figs. 2 to 8. The arrangements may also be implemented by hardware or by a combination of software and hardware.

In some arrangements, the program 930 may be tangibly contained in a computer readable medium which may be included in the device 900 (such as in the memory 920) or other storage devices that are accessible by the device 900. The device 900 may load the program 930 from the computer readable medium to the RAM 922 for execution. The computer readable medium may include any types of tangible non-volatile storage, such as ROM, EPROM, a flash memory, a hard disk, CD, DVD, and the like. Fig. 10 shows an example of the computer readable medium 1000 in form of CD or DVD. The computer readable medium has the program 930 stored thereon.

Generally, various arrangements of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of arrangements are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method 200 or 700 as described above with reference to Figs. 2 and 7. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular arrangements. Certain features that are described in the context of separate arrangements may also be implemented in combination in a single arrangement. Conversely, various features that are described in the context of a single arrangement may also be implemented in multiple arrangements separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

**Claims**

1. A method (200) comprising:

   selecting (210), at a first device (110) and from a resource pool, a first resource for transmission from the first device in a first transmission period, the resource pool configured or preconfigured for sidelink transmissions;
   in accordance with a determination (220) that a resource reservation for the transmission is based on a hopped resource reservation scheme, determining (230), from the resource pool, a reserved resource for a further transmission from the first device (110) in a second transmission period based on sidelink control information, the second transmission period being after the first transmission period; and

   transmitting (240) the transmission on the first resource with the sidelink control information on a physical sidelink channel, the sidelink control information indicating the reserved resource wherein the determining the reserved resource comprises:

   determining a first candidate hopping resource set in frequency domain based on an index of the first resource, the first candidate hopping resource set comprising a first number of continuous subchannels in the resource pool;
   determining a first hopping factor based on a first subset of cyclic redundancy check bits of the sidelink control information, the first hopping factor associated with an offset of the reserved resource in frequency domain with respect to the first resource; and
   determining the reserved resource based on the first hopping factor, the first candidate hopping resource set and a resource reservation period.

2. A method (700) comprising:

   receiving (710), at a second device (120) and in a first transmission period, sidelink control information of a first device (110) on a first resource;
   determining (720) a reserved resource of a resource pool configured or pre-configured for sidelink transmissions based on the sidelink control information, the reserved resource reserved for transmission from the first device in a second transmission period, the second transmission period being after the first transmission period; and
   selecting (730), from the resource pool, a second resource other than the reserved resource for transmission from the second device;
   wherein determining the reserved resource comprises:

   determining a first hopping factor based on a first subset of cyclic redundancy check bits of the sidelink control information, the first hopping factor associated with an offset of the reserved resource in frequency domain with respect to the first resource; and
   determining the reserved resource based on the first hopping factor, a resource reservation period and an index of the first resource.

3. A first apparatus (110) comprising:

   means for selecting (210), from a resource pool, a first resource for transmission from the first apparatus in a first transmission period, the resource pool configured or preconfigured for sidelink transmission;

in accordance with a determination (220) that a resource reservation for the transmission is based on a hopped resource reservation scheme, means for determining (230), from the resource pool, a reserved resource for a further transmission from the first apparatus in a second transmission period based on sidelink control information, the second transmission period being after the first transmission period; and

means for transmitting (240) the transmission on the first resource with the sidelink control information on a physical sidelink channel, the sidelink control information indicating the reserved resource;

wherein the means for determining the reserved resource comprising:

means for determining a first candidate hopping resource set in frequency domain based on an index of the first resource, the first candidate hopping resource set comprising a first number of continuous subchannels in the resource pool;

means for determining a first hopping factor based on a first subset of cyclic redundancy check bits of the sidelink control information, the first hopping factor associated with an offset of the reserved resource in frequency domain with respect to the first resource; and

means for determining the reserved resource based on the first hopping factor, the first candidate hopping resource set and a resource reservation period.

4. The first apparatus (110) of Claim 3, wherein the first resource is selected based on a random resource selection scheme.

5. The first apparatus (110) of Claim 3 or 4, wherein the sidelink control information comprises a first bit indicating that the resource reservation for the transmission is based on the hopped resource reservation scheme.

6. The first apparatus (110) of any of Claims 3-5, further comprising:
in accordance with a determination that the resource pool is configured or preconfigured for supporting hopped resource reservation, means for determining the resource reservation for the transmission is based on the hopped resource reservation scheme.

7. The first apparatus (110) of any of Claims 3-6, further comprising:
means for transmitting the further transmission on the reserved resource on the physical sidelink channel in the second transmission period.

8. A second apparatus (120) comprising:

means for receiving (710), in a first transmission period, sidelink control information of a first apparatus (110) on a first resource;

means for determining (720) a reserved resource of a resource pool configured or preconfigured for sidelink transmissions based on the sidelink control information, the reserved resource reserved for transmission from the first apparatus in a second transmission period, the second transmission period being after the first transmission period; and

means for selecting (730), from the resource pool, a second resource other than the reserved resource for transmission from the second apparatus;

wherein the means for determining the reserved resource comprises:

means for determining a first hopping factor based on a first subset of cyclic redundancy check bits of the sidelink control information, the first hopping factor associated with an offset of the reserved resource in frequency domain with respect to the first resource; and

means for determining the reserved resource based on the first hopping factor, a resource reservation period and an index of the first resource.

9. The second apparatus (120) of Claim 8, wherein the second resource is selected based on one of sensing based resource selection scheme or partial sensing based resource selection scheme.

10. The second apparatus (120) of Claim 8 or 9, further comprising:
means for determining, based on a first bit of the sidelink control information, the reserved resource for the transmission from the first apparatus reserved based on a hopped resource reservation scheme.

11. The second apparatus (120) of any of Claims 8-10, further comprising:
in accordance with a determination that the resource pool is configured or pre-configured for supporting hopped resource reservation, means for determining the reserved resource for the transmission from the first apparatus reserved based on the hopped resource reservation scheme.

**Patentansprüche**

1. Verfahren (200), das Folgendes umfasst:

   Auswählen (210) einer ersten Ressource zur Übertragung von einer ersten Vorrichtung (110) in einer ersten Übertragungsperiode an der ersten Vorrichtung und aus einem Ressourcenpool, wobei der Ressourcenpool für Sidelinkübertragungen ausgelegt oder vorausgelegt ist;
   gemäß einer Bestimmung (220), dass eine Ressourcenreservierung für die Übertragung auf einem Hopressourcenreservierungsplan basiert, Bestimmen (230) einer reservierten Ressource für eine weitere Übertragung von der ersten Vorrichtung (110) in einer zweiten Übertragungsperiode auf Basis von Sidelinksteuerinformationen vom Ressourcenpool, wobei die zweite Übertragungsperiode hinter der ersten Übertragungsperiode liegt; und
   Übertragen (240) der Übertragung auf der ersten Ressource mit den Sidelinksteuerinformationen auf einem physischen Sidelinkkanal, wobei die Sidelinksteuerinformationen die reservierte Ressource anzeigen
   wobei das Bestimmen der reservierten Ressource Folgendes umfasst:

      Bestimmen eines ersten Hopressourcensatzkandidaten in einer Frequenzdomäne auf Basis eines Index der ersten Ressource, wobei der erste Hopressourcensatzkandidat eine erste Anzahl von kontinuierlichen Unterkanälen im Ressourcenpool umfasst;
      Bestimmen eines ersten Hopfaktors auf Basis des ersten Untersatzes von zyklischen Redundanzprüfbits der Sidelinksteuerinformationen, wobei der erste Hopfaktor mit einem Versatz der reservierten Ressource in einer Frequenzdomäne mit Bezug auf die erste Ressource verknüpft ist; und
      Bestimmen der reservierten Ressource auf Basis des ersten Hopfaktors, des ersten Hopressourcensatzkandidaten und einer Ressourcenreservierungsperiode.

2. Verfahren (700), das Folgendes umfasst:

   Empfangen (710) von Sidelinksteuerinformationen einer ersten Vorrichtung (110) an einer zweiten Vorrichtung (120) und in einer ersten Übertragungsperiode auf einer ersten Ressource;
   Bestimmen (720) einer reservierten Ressource eines Ressourcenpools, der für Sidelinkübertragungen ausgelegt oder vorausgelegt ist, auf Basis der Sidelinksteuerinformationen, wobei die reservierte Ressource für eine Übertragung von der ersten Vorrichtung in einer zweiten Übertragungsperiode reserviert ist, wobei die zweite Übertragungsperiode hinter der ersten Übertragungsperiode liegt; und
   Auswählen (730) einer anderen zweiten Ressource als der reservierten Ressource zur Übertragung von der zweiten Vorrichtung aus dem Ressourcenpool;
   wobei das Bestimmen der reservierten Ressource Folgendes umfasst:

      Bestimmen eines ersten Hopfaktors auf Basis des ersten Untersatzes von zyklischen Redundanzprüfbits der Sidelinksteuerinformationen, wobei der erste Hopfaktor mit einem Versatz der reservierten Ressource in einer Frequenzdomäne mit Bezug auf die erste Ressource verknüpft ist; und
      Bestimmen der reservierten Ressource auf Basis des ersten Hopfaktors, einer Ressourcenreservierungsperiode und eines Index der ersten Ressource.

3. Erste Einrichtung (110), die Folgendes umfasst:

   Mittel zum Auswählen (210) einer ersten Ressource zur Übertragung von der ersten Einrichtung in einer ersten Übertragungsperiode aus einem Ressourcenpool, wobei der Ressourcenpool für Sidelinkübertragungen ausgelegt oder vorausgelegt ist;
   gemäß einer Bestimmung (220), dass eine Ressourcenreservierung für die Übertragung auf einem Hopressourcenreservierungsplan basiert, Mittel zum Bestimmen (230) einer reservierten Ressource für eine weitere Übertragung von der ersten Einrichtung in einer zweiten Übertragungsperiode auf Basis von Sidelinksteuerinformationen vom Ressourcenpool, wobei die zweite Übertragungsperiode hinter der ersten Übertragungsperiode liegt; und
   Mittel zum Übertragen (240) der Übertragung auf der ersten Ressource mit den Sidelinksteuerinformationen auf einem physischen Sidelinkkanal, wobei die Sidelinksteuerinformationen die reservierte Ressource anzeigen;
   wobei die Mittel zum Bestimmen der reservierten Ressource Folgendes umfassen:

      Mittel zum Bestimmen eines ersten Hopressourcensatzkandidaten in einer Frequenzdomäne auf Basis eines Index der ersten Ressource, wobei der erste Hopressourcensatzkandidat eine erste Anzahl von kontinuierlichen Unterkanälen im Ressourcenpool umfasst;
      Mittel zum Bestimmen eines ersten Hopfaktors auf Basis des ersten Untersatzes von zyklischen Redundanzprüfbits der Sidelinksteuerinformationen, wobei der erste Hopfaktor mit einem Versatz der reservierten Ressource in einer Frequenzdomäne mit Bezug auf die erste Ressource verknüpft ist; und
Mittel zum Bestimmen der reservierten Ressource auf Basis des ersten Hopfaktors, des ersten Hopressourcensatzkandidaten und einer Ressourcenreservierungsperiode.

**4.** Erste Einrichtung (110) nach Anspruch 3, wobei die erste Ressource auf Basis eines willkürlichen Ressourcenauswahlplans ausgewählt wird.

**5.** Erste Einrichtung (110) nach Anspruch 3 oder 4, wobei die Sidelinksteuerinformationen ein erstes Bit umfassen, das anzeigt, dass die Ressourcenreservierung für die Übertragung auf dem Hopressourcenreservierungsplan basiert.

**6.** Erste Einrichtung (110) nach einem der Ansprüche 3 bis 5, die ferner Folgendes umfasst:
gemäß einer Bestimmung, dass der Ressourcenpool zum Unterstützen einer Hopressourcenreservierung ausgelegt oder vorausgelegt ist, die Mittel zum Bestimmen der Ressourcenreservierung für die Übertragung auf dem Hopressourcenreservierungsplan basieren.

**7.** Erste Einrichtung (110) nach einem der Ansprüche 3 bis 6, die ferner Folgendes umfasst:
Mittel zum Übertragen der weiteren Übertragung auf der reservierten Ressource auf dem physischen Sidelinkkanal in der zweiten Übertragungsperiode.

**8.** Zweite Einrichtung (120), die Folgendes umfasst:

Mittel zum Empfangen (710) von Sidelinksteuerinformationen einer ersten Einrichtung (110) in einer ersten Übertragungsperiode auf einer ersten Ressource;
Mittel zum Bestimmen (720) einer reservierten Ressource eines Ressourcenpools, der für Sidelinkübertragungen ausgelegt oder vorausgelegt ist, auf Basis der Sidelinksteuerinformationen, wobei die reservierte Ressource für eine Übertragung von der ersten Einrichtung in einer zweiten Übertragungsperiode reserviert ist, wobei die zweite Übertragungsperiode hinter der ersten Übertragungsperiode liegt; und
Mittel zum Auswählen (730) einer anderen zweiten Ressource als der reservierten Ressource zur Übertragung von der zweiten Einrichtung aus dem Ressourcenpool;
wobei die Mittel zum Bestimmen der reservierten Ressource Folgendes umfassen:

Mittel zum Bestimmen eines ersten Hopfaktors auf Basis des ersten Untersatzes von zyklischen Redundanzprüfbits der Sidelinksteuerinformationen, wobei der erste Hopfaktor mit einem Versatz der reservierten Ressource in einer Frequenzdomäne mit Bezug auf die erste Ressource verknüpft ist; und
Mittel zum Bestimmen der reservierten Ressource auf Basis des ersten Hopfaktors, einer Ressourcenreservierungsperiode und eines Index der ersten Ressource.

**9.** Zweite Einrichtung (120) nach Anspruch 8, wobei die zweite Ressource auf Basis von einem von einem Erfassen auf Basis des Ressourcenauswahlplans oder einem teilweisen Erfassen auf Basis eines Ressourcenauswahlplans ausgewählt wird.

**10.** Zweite Einrichtung (120) nach Anspruch 8 oder 9, die ferner Folgendes umfasst:
Mittel zum Bestimmen der reservierten Ressource für die Übertragung von der ersten Einrichtung, die auf Basis eines Hopressourcenreservierungsplans reserviert ist, auf Basis eines ersten Bits der Sidelinksteuerinformationen.

**11.** Zweite Einrichtung (120) nach einem der Ansprüche 8 bis 10, die ferner Folgendes umfasst:
gemäß einer Bestimmung, dass der Ressourcenpool zum Unterstützen einer Hopressourcenreservierung ausgelegt oder vorausgelegt ist, Mittel zum Bestimmen der reservierten Ressource für die Übertragung von der ersten Einrichtung, die auf Basis des Hopressourcenreservierungsplans reserviert ist.

**Revendications**

**1.** Procédé (200) comprenant les étapes suivantes :

sélectionner (210), au niveau d'un premier dispositif (110) et à partir d'une réserve de ressources, une première ressource pour sa transmission à partir du premier dispositif dans une première période de transmission, la réserve de ressources étant configurée ou préconfigurée pour des transmissions de liaison latérale ;
conformément à une détermination (220) selon laquelle une réservation de ressource pour la transmission est basée sur un schéma de réservation de ressource à sauts, déterminer (230), à partir de la réserve de ressources, une ressource réservée pour une transmission supplémentaire à partir du premier dispositif (110) dans une deuxième période de transmission sur la base d'informations de commande de liaison latérale, la deuxième période de transmission étant postérieure à la première période de transmission ; et

transmettre (240) la transmission sur la première ressource avec les informations de commande de liaison latérale sur un canal physique de liaison latérale, les informations de commande de liaison latérale indiquant la ressource réservée ;

dans lequel la détermination de la ressource réservée comprend :

la détermination d'un premier ensemble de ressources de saut candidates dans le domaine fréquentiel sur la base d'un index de la première ressource, le premier ensemble de ressources de saut candidates comprenant un premier nombre de sous-canaux continus dans la réserve de ressources ;

la détermination d'un premier facteur de saut sur la base d'un premier sous-ensemble de bits de contrôle de redondance cyclique des informations de commande de liaison latérale, le premier facteur de saut étant associé à un décalage de la ressource réservée dans le domaine fréquentiel par rapport à la première ressource ; et

la détermination de la ressource réservée sur la base du premier facteur de saut, du premier ensemble de ressources de saut candidates et d'une période de réservation de ressource.

**2.** Procédé (700) comprenant les étapes suivantes :

recevoir (710), au niveau d'un deuxième dispositif (120) et dans une première période de transmission, des informations de commande de liaison latérale d'un premier dispositif (110) sur une première ressource ;

déterminer (720) une ressource réservée d'une réserve de ressources configurée ou préconfigurée pour des transmissions de liaison latérale sur la base des informations de commande de liaison latérale, la ressource réservée étant réservée pour sa transmission à partir du premier dispositif dans une deuxième période de transmission, la deuxième période de transmission étant postérieure à la première période de transmission ; et

sélectionner (730), à partir de la réserve de ressources, une deuxième ressource autre que la ressource réservée pour sa transmission à partir du deuxième dispositif ;

dans lequel la détermination de la ressource réservée comprend :

la détermination d'un premier facteur de saut sur la base d'un premier sous-ensemble de bits de contrôle de redondance cyclique des informations de commande de liaison latérale, le premier facteur de saut étant associé à un décalage de la ressource réservée dans le domaine fréquentiel par rapport à la première ressource ; et

la détermination de la ressource réservée sur la base du premier facteur de saut, d'une période de réservation de ressource et d'un index de la première ressource.

**3.** Premier appareil (110) comprenant :

des moyens pour sélectionner (210), à partir d'une réserve de ressources, une première ressource pour sa transmission à partir du premier appareil dans une première période de transmission, la réserve de ressources étant configurée ou préconfigurée pour une transmission de liaison latérale ;

conformément à une détermination (220) selon laquelle une réservation de ressource pour la transmission est basée sur un schéma de réservation de ressource à sauts, des moyens pour déterminer (230), à partir de la réserve de ressources, une ressource réservée pour une transmission supplémentaire à partir du premier appareil dans une deuxième période de transmission sur la base d'informations de commande de liaison latérale, la deuxième période de transmission étant postérieure à la première période de transmission ; et

des moyens pour transmettre (240) la transmission sur la première ressource avec les informations de commande de liaison latérale sur un canal physique de liaison latérale, les informations de commande de liaison latérale indiquant la ressource réservée ;

dans lequel les moyens pour déterminer la ressource réservée comprennent :

des moyens pour déterminer un premier ensemble de ressources de saut candidates dans le domaine fréquentiel sur la base d'un index de la première ressource, le premier ensemble de ressources de saut candidates comprenant un premier nombre de sous-canaux continus dans la réserve de ressources ;

des moyens pour déterminer un premier facteur de saut sur la base d'un premier sous-ensemble de bits de contrôle de redondance cyclique des informations de commande de liaison latérale, le premier facteur de saut étant associé à un décalage de la ressource réservée dans le domaine fréquentiel par rapport à la première ressource ; et

des moyens pour déterminer la ressource réservée sur la base du premier facteur de saut, du premier ensemble de ressources de saut candidates et d'une période de réservation de ressource.

4. Premier appareil (110) selon la revendication 3, dans lequel la première ressource est sélectionnée sur la base d'un schéma de sélection de ressource aléatoire.

5. Premier appareil (110) selon la revendication 3 ou 4, dans lequel les informations de commande de liaison latérale comprennent un premier bit indiquant que la réservation de ressource pour la transmission est basée sur le schéma de réservation de ressource à sauts.

6. Premier appareil (110) selon l'une des revendications 3 à 5, comprenant en outre :
conformément à une détermination selon laquelle la réserve de ressources est configurée ou préconfigurée pour prendre en charge une réservation de ressource à sauts, des moyens pour déterminer la réservation de ressource pour la transmission sur la base du schéma de réservation de ressource à sauts.

7. Premier appareil (110) selon l'une des revendications 3 à 6, comprenant en outre :
des moyens pour transmettre la transmission supplémentaire sur la ressource réservée sur le canal physique de liaison latérale dans la deuxième période de transmission.

8. Deuxième appareil (120) comprenant :

des moyens pour recevoir (710), dans une première période de transmission, des informations de commande de liaison latérale d'un premier appareil (110) sur une première ressource ;
des moyens pour déterminer (720) une ressource réservée d'une réserve de ressources configurée ou préconfigurée pour des transmissions de liaison latérale sur la base des informations de commande de liaison latérale, la ressource réservée étant réservée pour sa transmission à partir du premier appareil dans une deuxième période de transmission, la deuxième période de transmission étant postérieure à la première période de transmission ; et
des moyens pour sélectionner (730), à partir de la réserve de ressources, une deuxième ressource autre que la ressource réservée pour sa transmission à partir du deuxième appareil ;
dans lequel les moyens pour déterminer la ressource réservée comprennent :

des moyens pour déterminer un premier facteur de saut sur la base d'un premier sous-ensemble de bits de contrôle de redondance cyclique des informations de commande de liaison latérale, le premier facteur de saut étant associé à un décalage de la ressource réservée dans le domaine fréquentiel par rapport à la première ressource ; et
des moyens pour déterminer la ressource réservée sur la base du premier facteur de saut, d'une période de réservation de ressource et d'un index de la première ressource.

9. Deuxième appareil (120) selon la revendication 8, dans lequel la deuxième ressource est sélectionnée sur la base d'un schéma de sélection de ressource basé sur la détection ou d'un schéma de sélection de ressource basé sur la détection partielle.

10. Deuxième appareil (120) selon la revendication 8 ou 9, comprenant en outre :
des moyens pour déterminer, sur la base d'un premier bit des informations de commande de liaison latérale, la ressource réservée pour sa transmission à partir du premier appareil réservé sur la base d'un schéma de réservation de ressource à sauts.

11. Deuxième appareil (120) selon l'une des revendications 8 à 10, comprenant en outre :
conformément à une détermination selon laquelle la réserve de ressources est configurée ou préconfigurée pour prendre en charge une réservation de ressource à sauts, des moyens pour déterminer la ressource réservée pour la transmission à partir du premier appareil réservé sur la base du schéma de réservation de ressource à sauts.

**FIG. 1**

200

210

SELECT, FROM A RESOURCE POOL, A FIRST RESOURCE
FOR TRANSMISSION OF THE FIRST DEVICE IN A FIRST
TRANSMISSION PERIOD

220

RESOURCE RESERVATION IS BASED ON
HOPPED RESOURCE RESERVATION SCHEME

Y

230

DETERMINE, FROM THE RESOURCE POOL, A RESERVED
RESOURCE FOR A FURTHER TRANSMISSION OF THE FIRST
DEVICE IN A SECOND TRANSMISSION PERIOD BASED ON
SIDELINK CONTROL INFORMATION

240

TRANSMIT THE TRANSMISSION ON THE FIRST RESOURCE
WITH THE SIDELINK CONTROL INFORMATION FOR
INDICATING THE RESERVED RESOURCE ON A PHYSICAL
SIDELINK CHANNEL

**FIG. 2**

**FIG. 3**

**FIG. 4**

**FIG. 5**

**FIG. 6A**

**FIG. 6B**

**FIG. 6C**

700

710

RECEIVE, IN A FIRST TRANSMISSION PERIOD, SIDELINK CONTROL INFORMATION OF A FIRST DEVICE ON A FIRST RESOURCE

720

DETERMINE A RESERVED RESOURCE OF A RESOURCE POOL CONFIGURED OR PRE-CONFIGURED FOR SIDELINK TRANSMISSIONS BASED ON THE SIDELINK CONTROL INFORMATION

730

SELECT, FROM THE RESOURCE POOL, A SECOND RESOURCE OTHER THAN THE RESERVED RESOURCE FOR TRANSMISSION OF THE SECOND DEVICE

**FIG. 7**

**FIG. 8**

**FIG. 9**

**FIG. 10**

**EP 4 278 665 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2019230643 A1

### Non-patent literature cited in the description

- **LG ELECTRONICS**. Discussion on feasibility and benefits for mode 2 enhancement. *1-6,9-13 INV. A 3GPP DRAFT; R1-2005749, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE*, 08 August 2020, vol. RAN WG1 (e-Meeting), https://ftp.3gpp.org/tsg_ran/WGI_RL1/TSGR1_102-e/Docs/R1-2005749.zip